# EUROPEAN PATENT SPECIFICATION

(11) **EP 2 920 957 B1**
(45) Date of publication and mention of the grant of the patent: **24.02.2021**
(21) Application number: 13795195.0
(22) Date of filing: 12.11.2013
(51) Int. Cl.: H04N 5/272, H04N 5/265

(54) **METHOD OF OPERATING A VIDEO PROCESSING APPARATUS**
VERFAHREN ZUM BETREIBEN EINER VIDEOVERARBEITUNGSVORRICHTUNG
PROCÉDÉ D'EXPLOITATION D'UN APPAREIL DE TRAITEMENT VIDÉO

(30) Priority: 16.11.2012 EP 12193098
(43) Date of publication of application: 23.09.2015
(73) Proprietor: EVS Deutschland GmbH, 64295 Darmstadt (DE)
(72) Inventor: OBSTFELDER, Juergen, 35606 Solms (DE)
(74) Representative: Rossmanith, Manfred
(86) International application number: PCT/EP2013/073663
(87) International publication number: WO 2014/076102

(56) References cited:
- EP-A2- 0 949 818
- JP-A- 2000 083 193
- US-A1- 2012 011 568
- KAUL M ET AL: "Studio on demand by distributed video production over ATM", INTERNATIONAL BROADCASTING CONVENTION, LONDON, GB, 12 September 1996 (1996-09-12), pages 161-166, XP002165350,
- BOUTABA R ET AL: "Distributed Video Production: Tasks, Architecture and QoS Provisioning", MULTIMEDIA TOOLS AND APPLICATIONS, KLUWER ACADEMIC PUBLISHERS, BOSTON, US, vol. 16, no. 1-2, 1 January 2002 (2002-01-01), pages 99-136, XP002454086, ISSN: 1380-7501, DOI: 10.1023/A:1013245819429 cited in the application

## Description

### Field of the Invention

According to a first aspect the present invention is related to a method of operating a video/audio processing apparatus. In particular the present invention is related to a method according to claim 1. According to a second aspect the present invention is related to a video/audio processing apparatus.

### Background

Live video productions such as TV productions are realized today using vision mixers. Vision mixers are commercially available e.g. from the companies Grass Valley, Sony, Snell & Wilcox, and Ross.

A vision mixer (also called video switcher, video mixer, production switcher or simply mixer) is a device used to select between different video input signals to generate a video output signal. Besides creating different kinds of transitions the vision mixer can generate a multitude of video effects and comprises keyers, matte generators, text generators etc. By means of the vision mixer the user also controls the routing of signals from various sources to selectable destinations.

The vision mixer also performs the routing and switching of audio signals accompanying the video signals. However, since the processing of video signals is more complex than the processing of audio signals the present patent application is focused on the video signal. It is to be understood that in the context of the present patent application the processing of the video signal also implies a corresponding processing of an accompanying audio signal. Only for the sake of better intelligibility of the description of the present invention audio signals are not always mentioned in addition to the video signals.

In order to enable the multiple functionalities of vision mixers they consist of a huge amount of hardware components to process the video signals. The processing hardware components are located in one housing and are connected with local bus solutions in order to control all video processing hardware in real-time to meet the fast control requirements of live productions.

A conventional vision mixer comprises a central mixing electronic, several input channels and at least one output channel, a control unit and a user interface. Such kind of vision mixer is described for example in DE 103 36 214 A1.

The mixing electronic is provided with up to 100 or even more video input signals at the same time. The input signals are live video signals from cameras, recorded video clips from a server such as archived material, slow-motion clips from dedicated slow-motion servers, synthetic images, animations and alphanumeric symbols from graphic generators. Until present, FPGAs (field-programmable gate arrays) are used to process video.

Current vision mixers are expensive and difficult to operate. The European patent application EP 12175474.1 (attorney file reference 120014P) proposes to replace today's existing video processing systems/video production systems based on dedicated hardware by graphical processing unit (GPU) based processing units which are communicatively connected by an IP network structure. Typically, the network is operated by a TCP/IP protocol. In principle, this system allows routing any source or input signal to any destination. However, the currently available bandwidth of IP networks does not allow routing any input signal to any destination simultaneously.
Boutaba R et al describe distributed video production in the article: "Distributed Video Production: Tasks, Architecture and QoS Provisioning", published in Multimedia Tools and Applications, Kluwer Academic Publishers, Boston, US, Volume 16, Number 1-2, 1 January 2002, pages 99 to 136. The article addresses the issue of delay, delay variations and intermedia skew requirements. Boutaba et al explicitly state that delay performance is measured based on delay variation or "jitter". Jitter is a measure of the difference in delay experienced by different packets in the network due to variation in buffer occupancy in intermediate switching nodes. Another form of jitter is inter-stream jitter or "skew", which measures the difference in delay as seen by separate streams pertaining to the same application (such as audio and video). In order to ensure proper intra-stream synchronization, low delay variation is often required. Boutaba et al suggest compensating jitter by buffering the data streams. This requires the provision of sufficient memory capable of storing sufficiently long intervals of the video and audio data to compensate the jitter. In the case of high definition video data this requires a big storage capacity.

US 2012/0011568 A1 discloses an image viewing system comprising a server and a client device. The server transmits a base resolution image. A virtual lens enables displaying a portion of the base resolution image corresponding to an area of interest in a higher resolution. A user of the client device can dynamically control the positioning and the size of the virtual lens. The viewing system avoids the need of transmitting entire high-resolution images across a network.

EP 0 949 818 A2 discloses an image transmission system which can be applied to an on-vehicle display apparatus, comprising a transmission line, at least one image capture apparatus and at least one image receiving apparatus connected to the transmission line, the image transmission apparatus receives an image signal and layout information including original image information for specifying a cut-out position of an image signal to be cut out from the received image signal as inputs and outputs the image signal in the cut-out position toward the transmission line, and the image receiving apparatus includes image generation means for generating an image from the image signals through the transmission line. Therefore, when the image is transmitted by the use of the transmission line, the bandwidth of the transmission line to be used can be reduced, thereby realizing effective use of the bandwidth of the transmission line. The present invention aims at alleviating bandwidth issues related with distributed video/audio processing systems connected by an IP network structure.

### Summary of the Invention

According to a first aspect the present invention suggests a method of operating a video/audio processing apparatus as defined in claim 1, wherein the system comprises a plurality of input units and a processing unit connected by data links for communicating packetized data.

The inventive method enables to reduce the required bandwidth which is needed to provide for the additional input signal significantly because only the part of the input signal forming the selected portion of the composed image is transmitted. No matter how many additional input signals are included to form the composed image the necessary bandwidth for transferring the composed image is limited to a maximum of 2 times the bandwidth that is required to transfer a full-size input signal.

In an advantageous embodiment the method further comprises the step of sending the information about the selected image portion to the input unit which provides the main input signal to prevent this input unit from sending the part of the main input signal which corresponds to the selected image portion.

In another embodiment the method further comprises the step of processing the selected input signals on the level of the processing unit to form the composed image.

In yet another inventive embodiment the method further comprises the step of transmitting the key-signal to the processing unit only as a luminance signal.

According to a second aspect the present invention suggests a processing apparatus for processing video and/or audio signals, as defined in claim 5. The apparatus comprises a processing unit and at least one input unit. The processing unit and the input unit(s) are communicatively connected by data links for exchanging digital data in the packetized format. The packetized data represent video and/or audio signals and/or command signals communicated between the processing unit and the at least one input unit. The at least one input unit is adapted for receiving input signals. One of the input signals is selected as main input signal forming the main portion of the composed image and another input signal is selected as additional input signal forming a portion of the composed image at a predefined position and of predefined size in the composed image. The processing unit is adapted for selecting this portion of predefined size and predefined position in the composed image and for sending information about the selected image portion to the at least one input unit such that the at least one input unit is requested to transmit only the part of the input signal forming the selected portion of the composed image.

The processing apparatus has the same advantage as the inventive method and enables to significantly reduce the required bandwidth for certain types of composed images.

### Drawings

In the drawing an embodiment of the present invention is illustrated. Features which are the same in the figures are labeled with the same or a similar reference numbers. It shows:
Fig. 1 a schematic block diagram of a conventional vision mixer;
Fig. 2 a schematic block diagram of a system for video processing which is operated by a method according to the present invention;
Fig. 3 a another schematic block diagram of a system for video processing;
Figs. 4A to 4F different levels of a composed image; and
Fig. 5 a flow diagram illustrating the method according to the invention.

### Detailed description

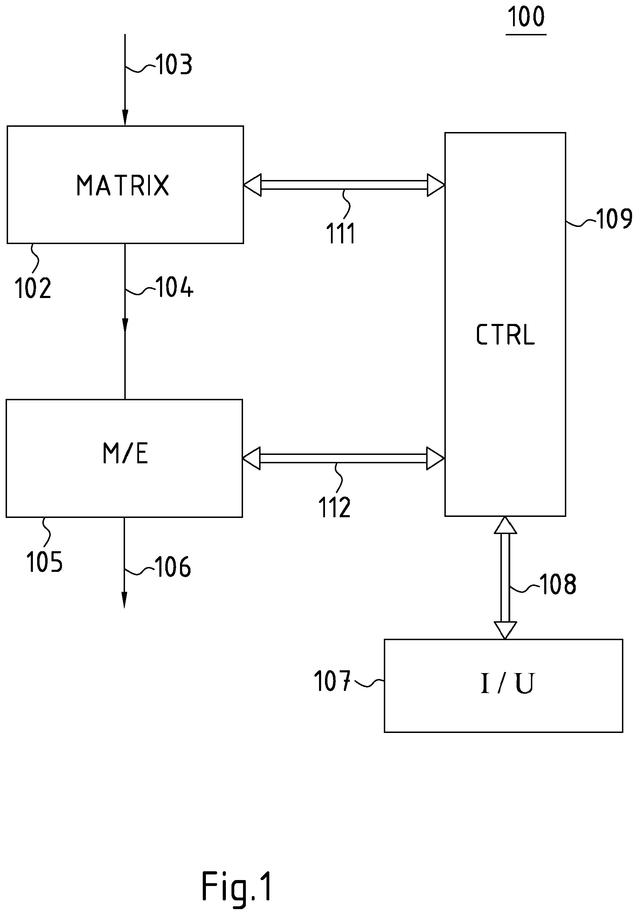

Figure 1 shows a schematic block diagram of a conventional vision mixer 100 which is also briefly called mixer. The mixer 100 comprises a cross point matrix or matrix 102 having a plurality of video inputs and a plurality of video outputs symbolized by arrows 103 and 104, respectively. Professional vision mixers are using serial digital interface (SDI) digital data for receiving or sending video data. The SDI digital data also comprise embedded audio streams, ancillary data, clock data and meta data. In a 1.5 Gbit/s data stream (1080i/720p picture format) there are 16 embedded audio channels and in a 3.0 Gbit/s data stream (1080p picture format)there are 32 embedded audio streams. The mixer 100 can send and receive digital data also in other formats. The matrix 102 is adapted for connecting any one of the video inputs with any one of the video outputs in response to a user command. The output channels of the matrix 102 are provided to a video effect stage (M/E stage) 105 of a mixer. The video output signal processed by the M/E stage 105 is indicated with an arrow 106. The functionalities of mixer 100 are controlled by means of an input unit 107 into which the user can enter control commands to control and execute the processing of the video input signals and to create and to produce a desired video output signal. The input unit 107 transfers the control commands via the data and control bus 108 to a control unit 109. The control unit 109 interprets the user input commands and addresses corresponding command signals to the matrix 102 and the M/E stage 105. For this purpose the control unit 109 is connected with the matrix 102 and the M/E stage 105 with data and control buses 111 and 112, respectively. The buses 108, 111, and 112 are bidirectional buses allowing return messages to the control unit 109 and the input unit 107. The return messages provide feedback of the operating status of matrix 102 and the M/E stage 105. The input unit 107 displays status indicators reflecting the operating status of the mixer 100 for the information of the user.

Modern vision mixers are provided with many more video input and output channels as it has been mentioned above and comprise up to eight downstream keyers. In consequence such a modern vision mixer is provided with more than 1000 pushbuttons. Obviously, a modern vision mixer is a complicated and expensive hardware device which is difficult to operate.

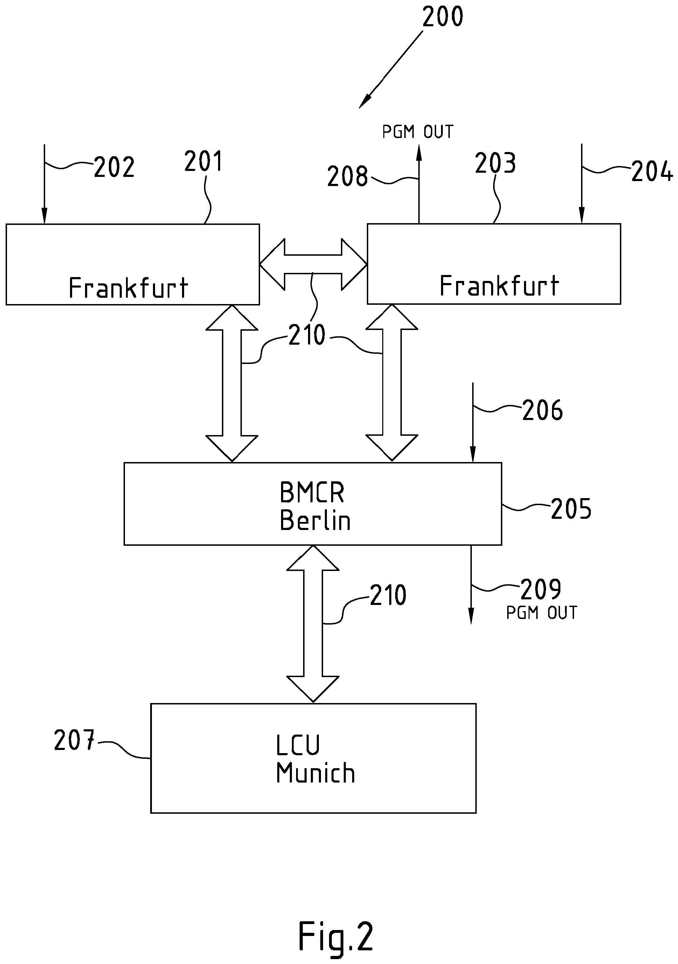

Figure 2 shows a schematic block diagram of the architecture of an alternative system for processing video and/or audio signals which has been described in detail in the European patent application EP12175474.1 filed by the same applicant. The proposed architecture of the inventive system allows building the hardware platform on standardized IT technology components such as servers, graphical processing units (GPU) and high-speed data links. Typically, these standardized IT components are less costly than dedicated broadcast equipment components. Besides the cost advantage the proposed system benefits automatically from technological progress in the area of the above-mentioned IT components. In the proposed system video processing hardware is split into smaller and flexible video processing units and combines dedicated control, video and audio interconnections into one logical data link between the individual processing units. The data links are designed such that they have a reliable and constant time relation. The data links are typically based on a reliable bidirectional high-speed data connection such as LAN or WAN. The individual processing units work independently as fast as possible to achieve or even exceed real-time processing behavior. Normally, real-time processing means that the processing is finished until the next video frame arrives. Therefore, the term "real-time" is a relative term and depends on the video frame rate. The system ensures that overall production real-time behavior with simultaneous processing is achieved and generates a consistent production signal PGM - OUT. This general concept is described in greater detail in the following.

In the video processing system according to the present invention the video processing hardware is organized in processing units 201, 203, 205, and 207 according to the geographical distribution of a production i.e. according to the geographical distribution of the resources enabling the production as it is shown schematically in figure 2. The technical core of each processing unit is a server, one or several graphical processing units (GPUs) and high-speed data links operated by a processing application framework and dedicated algorithms. The processing application framework and the algorithms are realized in software. The algorithms are adaptable and extendable to also realize further functionalities going beyond the functionalities of conventional vision mixers. The video signals are processed by GPUs in commercially available graphic cards. Hence, conventional video processing by dedicated hardware is replaced by software running on standardized IT components. All the processing capabilities of the GPUs are available and enable new video effects.

The operator controls the whole production as if it would be at one single production site in a single production unit next to the control room. The entire production process is moved from dedicated video/audio and control routing to common data links. The individual wiring hardware such as SDI connections is replaced by standardized data networks. The routing of all signals in the data networks is bidirectional and the production output and monitoring signals like dedicated multi-view outputs can be routed to any production unit which is connected in the network without extra cabling expenses.

High-speed data networks are more and more available not only in video production sites such as film or TV studios but also in wide area distribution networks, e.g. multiple of 10 G Ethernet or Infiniband.

In studios, professional video networking means that the video content is transferred uncompressed. For HDTV formats 1080i/720p data rates of 1.5 Gbit/s are resulting in studio environment where uncompressed audio and video data are used. For HD format 1080p a net data rate of even 3.0 Gbit/s is resulting.

Referring back to figure 2 every block represents one of the distributed processing units belonging to the system which is referred to in its entirety with reference number 200. In the exemplary embodiment shown in Figure 2 processing unit 201 is located in a football stadium in Frankfurt. Processing unit 201 receives as local sources 202 camera signals from the Stadium, slow-motion video from a local slow-motion server and eventually audio and video signals from an interview taking place locally. Processing unit 203 is also located in Frankfurt but not necessarily in the same place as processing unit 201. Processing unit 203 receives camera signals as local sources 204 from a live presenter in an interview room. Processing unit 205 is located in Berlin and represents the main processing room providing additional processing power for the ongoing production as well as access to archives and servers where for example advertisement clips are stored. The archives and the servers are indicated as local sources 206. The local sources 202, 204, and 206 provide the video and/or audio signals as SDI or streaming data. Finally, there is a processing unit 207 which represents the live control unit (LCU) located in Munich from where the live production is controlled and monitored. The production result is leaving processing units 203 and 205 as video and audio output signals PGM - OUT 208 and 209 for being broadcasted. The processing units 201, 203, 205, and 207 are interconnected with each other with reliable bidirectional high-speed data links 210 as shown in figure 2. The data links 210 enable communication between the processing units 201, 203, 205, and 207 and provide constant and known signal delays between the production units. It is noted that the high-speed data links 210 represent logical data links which are independent of a specific hardware realization. For example, the data links 210 can be realized with a set of several cables. In the situation shown in figure 2 the data links 210 are an Internet protocol (IP) wide area network (WAN). In a WAN special measures have to be taken to make sure that the data packages are received in the same sequence as they have been sent over the network to meet the requirements of video processing. Appropriate measures can be taken on the protocol and/or hardware level of the network such that the system behaves like a single big vision mixer.

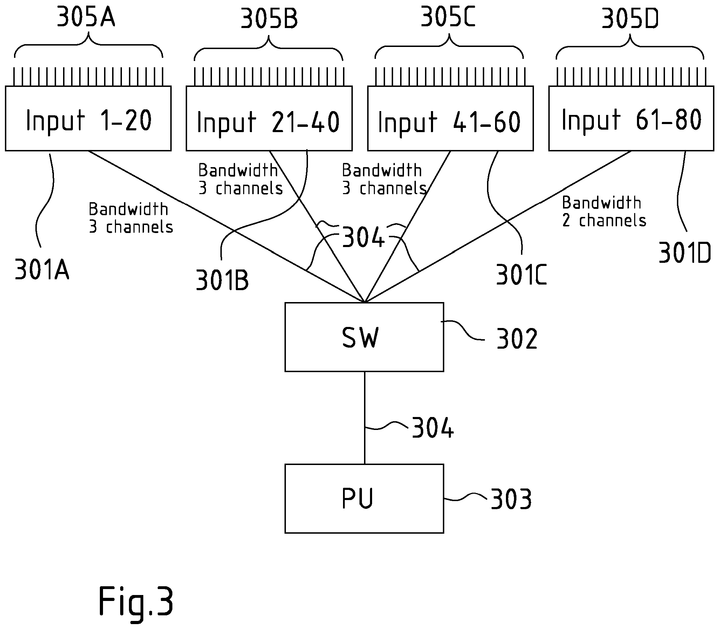

In practice there is no difference in the application of a conventional hardware-based vision mixer and the software-based vision mixer utilizing several processing units which are connected by an IP network. Though, the latter requires a much more careful bandwidth management. In a conventional hardware-based vision mixer for each input signal and dedicated hardware connection is provided and in consequence there is always sufficient bandwidth available for each input channel. In contrast to that, the links 210 between the processing units usually cannot carry all available input signals at the same time which will be explained in greater detail in conjunction with figure 3.

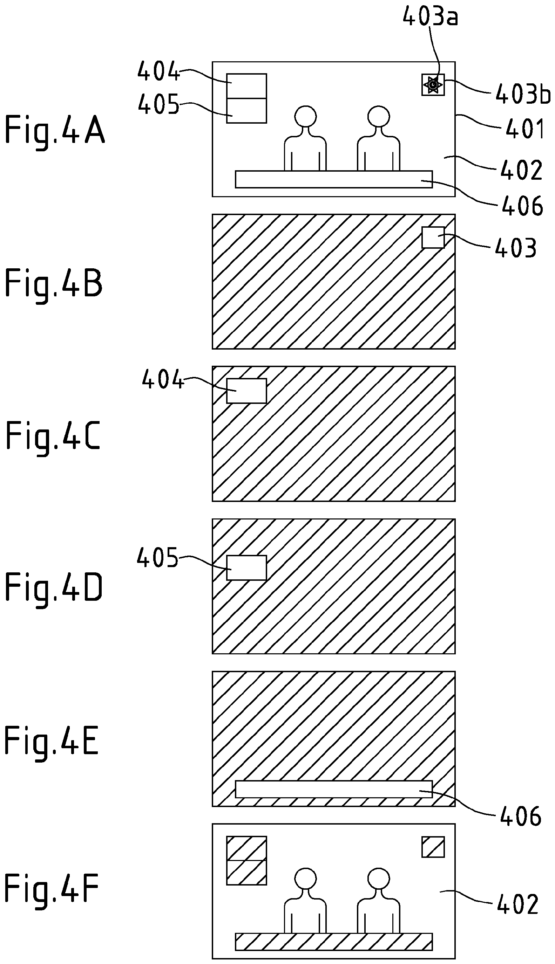

Figure 3 shows a different block diagram of a video/audio processing system of the type shown in figure 2. Figure 3 shows for input units 301A to 301D, one network switch 302 and one processing unit 303. The network switch 302 is connected by network links 304 with the input units 301A to 301D on the one hand and with the processing unit 303 on the other hand. In a practical embodiment the input units 301A to 301D are realized as computer servers. Each computer is equipped with several I/O cards or I/O modules each one having a number of BNC or SDI inputs. Each input unit 301A to 301D has 20 inputs 305A to 305D, i.e. the system has 80 signal inputs in total. The inputs 305A to 305D receive e.g. camera signals, output signals of digital video recorders etc. The network links are realized as an IP-based computer network providing a data rate from 6 to 10 GB. In other embodiments the network can provide a data rate from 40 to 100 GB. In figure 4A it is assumed that each input signal has the same bandwidth and thus the guaranteed data rate enables the data or network links 304 to transfer a defined number of input signals because the required bandwidth for one input signal is known. One input signal is also called "channel". Figure 3 shows the guaranteed data rate as an integer multiple of channels. It can be seen that in the example shown in figure 3 input units 301A, 301B, and 301C can transfer 3 input signals (channels) to the network switch 302 and input unit 301D two input signals (channels), respectively.

However, in current video productions the production signal is a composed image (or composed signal) consisting of many different source signals. A typical example of such composed images are news programs, sales programs etc. where significant portions of the image consists of inserted advertisements, stock market information, breaking news and the like as inserted tiles or bars. Most of the times the bottom and/or the left section of the image are/is composed of the mentioned tiles or bars. The total number of input signals involved to create the composed image can easily reach approximately 15. Since today each of the involved signals is transferred in full bandwidth the network which connects input units and processing unit would need to provide sufficient bandwidth to transfer a corresponding number of channels. In addition to that, each image insertion consists of two signals: One signal (the "fill-signal") which contains the actual image information and a second signal which contains the information how the first signal should be inserted into a background signal. This second signal is called "key-signal" (in common computer graphic programs this is called the "alpha channel") and comprises a chrominance signal component and a luminance signal component. However, the key-signal never contains any chrominance information. The luminance information in the luminance signal component defines the way of insertion. In the simplest case the luminance signal component is black (0% signal level) for areas which are not inserted and white (100% signal level) for areas which are inserted. For areas with transparent insertion (e.g. a Logo has an out-fading border) the key-signal goes gradually from 100% to 0%. In practice the fill-signal is multiplied with the luminance value k of the key-signal representing the signal level of the luminance signal component and the main input signal (background signal) is multiplied with the factor (1-k) to make a "hole" into which the fill-signal is filled in by superposing the two signals in the composed image. The luminance value k varies linearly from 1 to 0 corresponding to 100% and 0% signal level, respectively. Obviously, the transferred image portion must always include the complete area where the luminance value k of the key-signal is different from 0. For the key-signal in any case only the luminance component has to be considered. Therefore, in an embodiment of the present invention the chrominance signal component of the key-signals is not transferred which saves 50% bandwidth for this channel as a start. Regardless of the saving of bandwidth by eliminating the chrominance signal component of the key-signal, still the necessary bandwidth to transfer all these signals is simply not available in IP networks as it has been described with regard to figure 3.

The method according to the present invention therefore suggests additionally another approach which will be described in connection with figures 4A to 4F.

Figure 4A displays the composed image of a sales program. The composed image 401 or signal is displayed on a screen in the same way as a user sees the composed image when watching the sales program on a TV. The main portion 402 of the image 401 is a studio situation where two persons have a conversation e.g. about a new product. In the following we will call this input signal the main input signal. In the upper right corner of the composed image 401 there is a logo 403a of the broadcast channel. The area around the logo 403a is indicated with the reference number 403b. In the left section of the image 401 there are two inserted tiles or picture-in-pictures 404 and 405 showing advertisements. Finally, there is a text bar 406 inserted in the bottom section of the image 401. Even though the composed image 401 shown in figure 4A is somewhat simplified because it consists of only 9 different input signals (main input signal of main portion 402, fill-signal and key-signal of logo 403a, advertisements 404 and 405, and text bar 406; i.e. 1 + 4 x 2 = 9) it is nevertheless well-suited to explain the principle of the present invention.

Figure 4B shows the input signal for the logo 403a. It is noted that only the part of the corresponding input signal which is actually displayed in image 401 and associated with area 403b is transferred to the processing unit. The hatched part of this input signal is not transferred and thus the required bandwidth for transferring the signal is reduced significantly, e.g. by 80 to 90%. Similarly, figures 4C, 4D and 4E show the input signals of the first advertisement tile 404, the second advertisement tile 405, and the text bar 406. For all of these input signals the hatched signal part representing the hatched area in the image 401 is not transferred. Likewise the corresponding key-signals are not transferred for the hatched areas shown in figures 4B to 4E. Since the main input signal is completely transmitted the user can fade-in or fade-out all insertions at his discretion. In general terms the described approach is based on transmitting only the relevant content of an input signal. The relevant content of the input signal corresponds to the relevant part of the input signal. A prerequisite for this approach is that the relevant content is and remains at a predefined position in the image and has an invariable predetermined size.

However, there may be situations where such kind of flexibility to be able to fade-in or fade-out all insertions is less important compared with limiting the required bandwidth even further and regardless of how many input signals are used to create the composed image. An alternative embodiment illustrated in figure 4F therefore does not transmit the signal parts of the main image signal which are later replaced by image insertions. In this case, however, fading-out of the inserted tube portions in the composed image is no longer feasible because there would remain dark areas in the composed image 401 corresponding to the hatched areas shown in figure 4F. Regardless of how many input signals are used to create the composed image the required bandwidth to transmit the composed image remains at one single channel. Figure 4F shows the input signal for the main portion 402 of the image 401. As it is illustrated by hatched areas in figure 4F the previously identified relevant portions of the other input signals are cut out from the main input signal. In the same way as described with regard to figures 4B to 4E the parts of the main input signal corresponding to the hatched areas is not transmitted by the input unit.

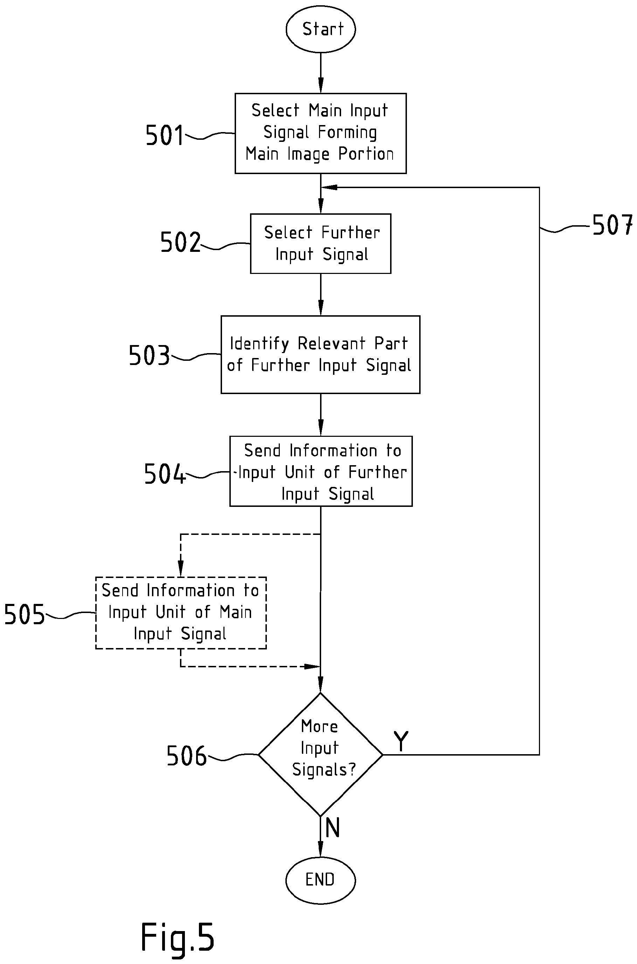

The way how the approach of the inventive method is realized in practice will be described in further detail related to the flow diagram shown in figure 5.

In a first step 501 the user operating a video/audio processing system looks at the available input signals one by one and selects the main input signal which shall be used for the main image portion 402. In step 502 the user looks again at the other available input signals one by one and selects a further input signal to be used in the composed image. Once the further input signal is selected then the user identifies in step 503 the relevant part of the input signal corresponding to the relevant portion in the composed image. E.g. for the input signal providing the logo 403a only the input signal part corresponding to the area 403b where the logo 403a is displayed is relevant. In step 504 the information about which part of the input signal is relevant is communicated in terms of coordinates describing the area in the composed image where the relevant part of the input signal is used. The input unit providing the input signal receives the information and in response transmits only the corresponding signal part henceforward. In step 506 the user decides if he wants to integrate more input signals into the composed image. If the answer is yes then the process begins again with step 502 as it is indicated with feedback loop 507. This process is repeated for all input signals until all relevant parts of input signals selected by the user for the composed image are defined and the corresponding information has been communicated to the input units providing the relevant input signals. Since the user only looks at a single input signal at a time only bandwidth for transmitting a single channel is required during the selection process.

The processing unit replaces the areas in the main portion of the image with the relevant portions of the other input signals. The relevant parts of the other input signals are supplementary to the main input signal and therefore the required bandwidth increases with an increasing number of input signals.

In the alternative embodiment related to figure 4F where parts of the main input signal are not transmitted an additional step 505 is required which is indicated in figure 5 with dashed lines. In step 505 the same information about the relevant portions of the input signals is transmitted to the input unit providing the main portion of the composed image. In connection with the main input signal the information is used in a complementary way, i.e. the identified portion of the main input signal is no longer transmitted to the processing unit. The advantageous consequence of this approach is that no matter how many input signals are used to create the composed image only the bandwidth corresponding to a single channel is needed because for every supplementary part of an additional input signal a corresponding part of the main input signal is removed.

The method according to present invention effectively limits in a video/audio processing system comprising a plurality of input and processing units which are connected by an IP network bandwidth requirements for producing composed images.

### List of reference numbers

100 vision mixer
102 crosspoint matrix
103 input signals
104 output signals
105 mixing and a video effect stage
106 process video output signal
107 input unit
108 control bus
109 control unit
111 control box
112 control box
200 processing system
201 processing unit
202 external sources
203 processing unit
204 external sources
205 processing unit
206 local sources
207 processing unit
208, 209 output signals
210 data links
301A- 301D input unit
302 network switch
303 processing unit
304 network link
305A - 305D inputs
401 composed image
402 main portion
403a logo
403b area of the logo
404, 405 advertisement tiles
406 text bar

## Claims

1. Method of operating a video/audio processing apparatus, wherein the apparatus comprises a plurality of input units (301A-301D) and a processing unit (303) connected by data links (304) for communicating packetized data, wherein the processing unit (303) is adapted to form a composed image based on at least two video input signals, wherein the method comprises the following steps:
a) receiving video input signals (305A - 305D) at the input units (301A - 301D);
b) selecting one video input signal in response to a user input as a main video input signal which forms a main portion (402) of the composed image (401);
c) selecting an additional video input signal in response to a user input to form a portion (403 - 405) of the composed image (401) at a predefined position and of a predefined size in the composed image (401); wherein the method is **characterized by**
d) selecting this portion of predefined size and of predefined position in response to a user input in the additional video input signal, wherein the portion is to be included in the composed image;
e) sending information about the selected image portion (403 - 405) to one of the input units (301A - 301D) which provides the additional video input signal;
f) requesting the one input unit (301A - 301D) to transmit only the part of the additional video input signal forming the selected portion of the additional video input signal to the processing unit (303) via the data links (304);
g) generating a key-signal for inserting the selected portion of the additional video input signal into the main input video signal; and
h) processing the main video input signal and the transmitted part of the additional video input signal in the processing unit (303) to form the composed image.

2. Method according to claim 1, wherein the method further comprises the step of repeating the steps c) to h).

3. Method according to claim 1 or 2, wherein the method further comprises the step of sending the information about the selected image portion (403 - 405) to the input unit which provides the main video input signal to prevent this input unit from sending the part of the main video input signal which corresponds to the selected image portion.

4. Method according to claim 1, wherein the method further comprises the step of transmitting the key-signal to the processing unit (303) only as a luminance signal.

5. Processing apparatus for processing video and/or audio signals, wherein the apparatus comprises a processing unit (303) and a plurality of input units (301A-301D), wherein the processing unit (303) and the input unit(s) (301A - 301D) are communicatively connected by data links (304) for exchanging digital data in a packetized format, wherein the packetized data represent video signals and/or command signals communicated between the processing unit (303) and the plurality of input units (301A-301D), wherein the plurality of input units are adapted for receiving video input signals (305A- 305D), wherein one of the video input signals being selected by a user as main video input signal forming a main portion (402) of a composed image and another video input signal being selected by a user as additional video input signal forming a portion (403-405) of the composed image (401), **characterized by** the processing unit (303) is adapted for selecting a portion of predefined size and predefined position in the additional video input signal in response to a user input and for sending information about the selected image portion (403 - 405) to one of the input units (301A-301D) such that the one input unit is requested to transmit only the part of the video input signal forming the selected portion of the additional video input signal, wherein the processing unit (303) is adapted for generating a key-signal for inserting the selected portion of the additional video input signal into the main video input signal, and wherein the processing unit is further adapted to process the main video input signal and the transmitted part of the additional video input signal in the processing unit (303) to form the composed image.

## Patentansprüche

1. Verfahren zum Betreiben einer Video-/Audio-Verarbeitungsvorrichtung, wobei die Vorrichtung eine Mehrzahl von Eingangseinheiten (301A-301D) und eine Verarbeitungseinheit (303) umfasst, die durch Datenverbindungen (304) verbunden sind, um paketierte Daten zu übertragen, wobei die Verarbeitungseinheit (303) dazu eingerichtet ist, um ein auf mindestens zwei Videoeingangssignalen basierendes zusammengesetztes Bild zu erzeugen, wobei das Verfahren die folgenden Schritte umfasst:
a) Empfangen von Video-Eingangssignalen (305A-305D) an den Eingangseinheiten (301A-301 D);
b) Auswählen eines Videosignals in Reaktion auf eine Benutzereingabe als ein Hauptvideoeingangssignal, das einen Hauptteil (402) des zusammengesetzten Bildes (401) bildet;
c) Auswählen eines zusätzlichen Videoeingangssignals in Reaktion auf eine Benutzereingabe, um einen Ausschnitt (403-405) des zusammengesetzten Bildes (401) an einer vordefinierten Position und mit einer vordefinierten Größe in dem zusammengesetzten Bild (401) zu bilden;
wobei das Verfahren **gekennzeichnet ist durch**
d) Auswählen dieses Ausschnitts mit vordefinierter Größe und vordefinierter Position in Reaktion auf eine Benutzereingabe in dem zusätzlichen Videoeingangssignal, wobei der Ausschnitt in das zusammengesetzte Bild eingefügt werden soll;
e) Senden von Informationen über den ausgewählten Bildausschnitt (403-405) an eine der Eingangseinheiten (301A-301D), die das zusätzliche Videoeingangssignal bereitstellt;
f) Auffordern der einen Eingangseinheit (301A-301D), nur den Teil des zusätzlichen Videoeingangssignals, der den ausgewählten Ausschnitt des zusätzlichen Videoeingangssignals bildet, über die Datenverbindungen (304) an die Verarbeitungseinheit (303) zu übertragen;
g) Erzeugen eines Stanzsignals zum Einfügen des ausgewählten Ausschnitts des zusätzlichen Videoeingangssignals in das Hauptvideosignal; und
h) Verarbeitung des Hauptvideoeingangssignals und des übertragenen Teils des zusätzlichen Videoeingangssignals in der Verarbeitungseinheit (303), um das zusammengesetzte Bild zu erzeugen.

2. Verfahren nach Anspruch 1, wobei das Verfahren weiterhin den Schritt der Wiederholung der Schritte c) bis h) umfasst.

3. Verfahren nach Anspruch 1 oder 2, wobei das Verfahren ferner den Schritt des Sendens der Information über den ausgewählten Bildausschnitt (403-405) an die Eingangseinheit umfasst, die das Hauptvideoeingangssignal bereitstellt, um zu verhindern, dass diese Eingangseinheit den Teil des Hauptvideoeingangssignals sendet, der dem ausgewählten Bildausschnitt entspricht.

4. Verfahren nach Anspruch 1, wobei das Verfahren ferner den Schritt des Übertragens des Stanzsignals an die Verarbeitungseinheit (303) nur als Luminanzsignal umfasst.

5. Verarbeitungsvorrichtung zum Verarbeiten von Video- und/oder Audiosignalen, wobei die Vorrichtung eine Verarbeitungseinheit (303) und eine Mehrzahl von Eingangseinheiten (301A-301D) umfasst, wobei die Verarbeitungseinheit (303) und die Eingangseinheit(en) (301A-301D) durch Datenverbindungen (304) kommunikativ verbunden sind, um digitale Daten in einem paketierten Format auszutauschen, wobei die paketierten Daten Videosignale und/oder Befehlssignale darstellen, die zwischen der Verarbeitungseinheit (303) und der Mehrzahl von Eingangseinheiten (301A-301 D) übertragen werden, wobei die Mehrzahl der Eingangseinheiten zum Empfangen von Videoeingangssignalen (305A-305D) ausgelegt sind, wobei eines der Videoeingangssignale von einem Benutzer als Hauptvideoeingangssignal ausgewählt wird, das einen Hauptteil (402) eines zusammengesetzten Bildes bildet, und ein anderes Videoeingangssignal von einem Benutzer als zusätzliches Videoeingangssignal ausgewählt wird, das einen Ausschnitt (403-405) des zusammengesetzten Bildes (401) bildet, **dadurch gekennzeichnet, dass** die Verarbeitungseinheit (303) dazu eingerichtet ist, um einen Ausschnitt mit vordefinierter Größe und vordefinierter Position in dem zusätzlichen Videoeingangssignal in Reaktion auf eine Benutzereingabe auszuwählen und um Informationen über den ausgewählten Bildausschnitt (403-405) an eine der Eingangseinheiten (301A-301D) zu senden, sodass die eine Eingangseinheit aufgefordert wird, nur den Teil des Videoeingangssignals zu übertragen, der den ausgewählten Ausschnitt des zusätzlichen Videoeingangssignals bildet, wobei die Verarbeitungseinheit (303) zum Erzeugen eines Stanzsignals zum Einfügen des ausgewählten Teils des zusätzlichen Videoeingangssignals in das Hauptvideoeingangssignal eingerichtet ist, und wobei die Verarbeitungseinheit ferner dazu eingerichtet ist, um das Hauptvideoeingangssignal und den übertragenen Teil des zusätzlichen Videoeingangssignals in der Verarbeitungseinheit (303) zu verarbeiten, um das zusammengesetzte Bild zu erzeugen.

## Revendications

1. Procédé pour faire fonctionner un dispositif de traitement vidéo / audio, le dispositif comprenant une pluralité d'unités d'entrée (301A-301D) et une unité de traitement (303) qui sont reliées par des liaisons de données (304) pour transmettre des données en paquets, l'unité de traitement (303) étant configurée pour générer une image composite basée sur au moins deux signaux d'entrée vidéo, le procédé comprenant les étapes suivantes :
a) réception de signaux d'entrée vidéo (305A-305D) au niveau des unités d'entrée (301A-301D) ;
b) sélection d'un signal vidéo en réaction à une entrée utilisateur en tant que signal d'entrée vidéo principal qui forme une partie principale (402) de l'image composite (401) ;
c) sélection d'un signal d'entrée vidéo supplémentaire en réaction à une entrée utilisateur pour former une portion (403-405) de l'image composite (401) à une position prédéfinie et avec une taille prédéfinie dans l'image composite (401) ;
le procédé étant **caractérisé par** :
d) sélection de cette portion de taille prédéfinie et avec une position prédéfinie en réaction à une entrée utilisateur dans le signal d'entrée vidéo supplémentaire, la portion devant être insérée dans l'image composite ;
e) envoi d'informations sur la portion d'image sélectionnée (403-405) à une des unités d'entrée (301A-301D) qui fournit le signal d'entrée vidéo supplémentaire ;
f) demande à l'une unité d'entrée (301A-301D) de ne transmettre à l'unité de traitement (303) via les liaisons de données (304) que la partie du signal d'entrée vidéo supplémentaire qui forme la portion sélectionnée du signal d'entrée vidéo supplémentaire ;
g) génération d'un signal d'incrustation pour insérer la portion sélectionnée du signal d'entrée vidéo supplémentaire dans le signal vidéo principal ; et
h) traitement du signal d'entrée vidéo principal et de la partie transmise du signal d'entrée vidéo supplémentaire dans l'unité de traitement (303) pour générer l'image composite.

2. Procédé selon la revendication 1, le procédé comprenant en outre l'étape de la réitération des étapes c) à h).

3. Procédé selon la revendication 1 ou 2, le procédé comprenant en outre l'étape de l'envoi de l'information sur la portion d'image sélectionnée (403-405) à l'unité d'entrée qui fournit le signal d'entrée vidéo principal pour empêcher que cette unité d'entrée n'émette la partie du signal d'entrée vidéo principal qui correspond à la portion d'image sélectionnée.

4. Procédé selon la revendication 1, le procédé comprenant en outre l'étape de la transmission du signal d'incrustation à l'unité de traitement (303) uniquement en tant que signal de luminance.

5. Dispositif de traitement pour traiter des signaux vidéo et/ou audio, le dispositif comprenant une unité de traitement (303) et une pluralité d'unités d'entrée (301A-301 D), l'unité de traitement (303) et l'unité / les unités d'entrée (301A-301 D) étant reliées communicativement par des liaisons de données (304) pour échanger des données numériques dans un format de paquet, les données en paquets représentant des signaux vidéo et/ou des signaux de commande qui sont transmis entre l'unité de traitement (303) et la pluralité d'unités d'entrée (301A-301D), la pluralité d'unités d'entrée étant conçues pour recevoir des signaux d'entrée vidéo (305A- 305D), l'un des signaux d'entrée vidéo étant sélectionné par un utilisateur en tant que signal d'entrée vidéo principal qui forme une partie principale (402) d'une image composite et un autre signal d'entrée vidéo étant sélectionné par un utilisateur en tant que signal d'entrée vidéo supplémentaire qui forme une portion (403-405) de l'image composite (401), **caractérisé en ce que** l'unité de traitement (303) est configurée pour sélectionner une portion de taille prédéfinie et avec une position prédéfinie dans le signal d'entrée vidéo supplémentaire en réaction à une entrée utilisateur et pour envoyer des informations sur la portion d'image sélectionnée (403-405) à une des unités d'entrée (301A-301D), de sorte qu'une unité d'entrée est invitée à ne transmettre que la partie du signal d'entrée vidéo qui forme la portion sélectionnée du signal d'entrée vidéo supplémentaire, l'unité de traitement (303) étant configurée pour générer un signal d'incrustation pour insérer la partie sélectionnée du signal d'entrée vidéo supplémentaire dans le signal d'entrée vidéo principal, et l'unité de traitement étant en outre configurée pour traiter le signal d'entrée vidéo principal et la partie transmise du signal d'entrée vidéo supplémentaire dans l'unité de traitement (303) pour générer l'image composite.
